(19) Europäisches Patentamt
European Patent Office
Office européen des brevets

(11) **EP 1 571 015 B1**

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(51) Int Cl.:
***B60G 17/015*** *(2006.01)*     ***B60G 5/00*** *(2006.01)*
***B62D 61/12*** *(2006.01)*

(21) Anmeldenummer: **05000094.2**

(22) Anmeldetag: **05.01.2005**

(54) **Verfahren zur Anfahrhilfesteuerung**

Start-assist control method

Méthode pour commander une aide au démarrage

(84) Benannte Vertragsstaaten:
**DE FR GB IT SE**

(30) Priorität: **04.03.2004 DE 102004010561**

(43) Veröffentlichungstag der Anmeldung:
**07.09.2005 Patentblatt 2005/36**

(73) Patentinhaber: **WABCO GmbH**
**30453 Hannover (DE)**

(72) Erfinder:
• **Jovers, Ingo**
**30989 Gehrden (DE)**
• **Kleen, Berend**
**30161 Hannover (DE)**

• **Lucas, Johann**
**31319 Sehnde (DE)**

(74) Vertreter: **Schrödter, Manfred et al**
**WABCO GmbH**
**Postfach 91 12 62**
**30432 Hannover (DE)**

(56) Entgegenhaltungen:
| | |
|---|---|
| EP-A- 1 063 107 | EP-A- 1 359 085 |
| EP-B- 0 411 352 | WO-A- 00/56561 |
| DE-A1- 3 525 027 | DE-A1- 4 317 847 |
| DE-A1- 4 442 488 | DE-A1- 10 216 564 |
| DE-C1- 3 734 618 | DE-U- 6 945 754 |

# EP 1 571 015 B1

**Beschreibung**

Die Erfindung betrifft ein Verfahren zur Steuerung der Anfahrhilfe in einem Fahrzeugzug.

Aus der EP 0 411 352 B1 ist eine Anfahrhilfe für luftgefederte Mehrachsfahrzeuge bekannt, bei denen an den Achsen über Ventilmittel mit Druckluft versorgbare Luftfederbälge vorgesehen sind. Neben zumindest einer Antriebsachse ist zumindest eine liftbare Zusatzachse vorgesehen. Zur Aktivierung der Anfahrhilfe werden die Luftfederbälge der Zusatzachse vollständig entlüftet, und gleichzeitig wird sie über eine Liftvorrichtung angehoben, wodurch die dabei freiwerdende Achslast zusätzlich auf die Antriebsachse übertragen wird, um so die Achslast der Antriebsachse zu erhöhen. Andere Verfahren sind aus der EP 1 359 085 A2 und der DE 37 34 618 C1 bekannt.

Auch bei Fahrzeugzügen, die z. B. als Kombination eines Auflieger-Zugfahrzeuges und eines mit diesem Zugfahrzeug gekoppelten Auflieger-Anhängefahrzeugs bestehen, kann bei ungünstigen Bedingungen zum Anfahren, z. B. bei einer vereisten Fahrbahn, eine Anfahrhilfe im Fahrzeug aktiviert werden, welche die Traktion der Triebachse des Zugfahrzeugs erhöht. Hierzu ist z. B. im Zugfahrzeug in der Nachbarschaft der Triebachse eine entlastbare Achse vorgesehen, die, wenn sie als Liftachse ausgebildet ist, zur Triebachsen-Traktionserhöhung angehoben wird oder, wenn sie als Schleppachse ausgebildet ist, entlastet wird, um ein mehr an Gewichtskraft auf die Zugfahrzeug-Triebachse zu verlagern.

Aus der DE 102 16 564 A1, die ein Datenaustausch-Verfahren in einem Fahrzeugzug über einen PLC-Datenbus (power line communication) beschreibt, ist bekannt, dass eine in einem Anhängefahrzeug, also nicht im Bereich der Zugfahrzeug-Triebachse befindliche Liftachse unter Nutzung geeigneter Befehle über den PLC-Datenbus ausgehend von einer elektronischen Steuereinheit im Zugfahrzeug eingefahren oder ausgefahren werden kann (dort Fig. 5). Diese Schrift beschreibt ebenfalls (dort Fig. 10), die Achslast einer luftgefederten Achse des Auflieger-Anhängefahrzeugs durch Messung eines Balgdruckes in einer elektronischen Steuereinheit des Aufliegers zu bestimmen und diese über den PLC-Bus zum Zugfahrzeug zu übertragen. Darüber hinaus gibt diese Schrift keine weiteren Anregungen zur Durchführung einer Anfahrhilfe-Steuerung. Nachteilig ist auf jeden Fall, dass der dort offenbarte PLC-Datenbus nur in den USA eingesetzt wird und z. B. in Europa nicht zur Verfügung steht.

Generell ist am Stand der Technik nachteilig, dass für das Zugfahrzeug eines Fahrzeugzuges mindestens eine entlastbare Achse zur Tragfähigkeitserhöhung bei hohen Lasten vorgesehen sein muss, um eine die Traktion des Fahrzeugzugs erhöhende Anfahrhilfe-Funktion zu realisieren. In vielen Fällen ist nämlich lediglich ein 4x2-Zugfahrzeug vorgesehen, das nicht über eine derartige weitere entlastbare Achse verfügt.

Der Erfindung liegt deshalb die Aufgabe zugrunde, eine Anfahrhilfe für einen Fahrzeugzug vorzuschlagen, die auch ohne eine entlastbare Achse im Zugfahrzeug funktionsfähig ist, und damit für beide Fälle, nämlich den Fall ohne und den Fall mit einer entlastbaren Achse anwendbar ist.

Diese Aufgabe wird durch die im Patentanspruch 1 angegebene Erfindung gelöst; Weiterbildungen und vorteilhafte Ausführungsbeispiele der Erfindung sind in den Unteransprüchen angegeben.

Nach der Erfindung wird ein im Fahrzeugzug vorhandener Datenbus in vorteilhafter Weise zur Realisierung der Anfahrhilfen-Traktionserhöhungsfunktionen benutzt.

Eine Weiterbildung der Erfindung hat den Vorteil, dass auch in Europa übliche Datenbus-Mittel eingesetzt werden.

Eine andere Weiterbildung der Erfindung hat den Vorteil, dass eine Anforderung zur Anfahrhilfen-Traktionserhöhung automatisch über die Datenbusmittel gestellt wird.

Die Erfindung wird im folgenden anhand eines Ausführungsbeispiels, das in der Zeichnung dargestellt ist, näher erläutert.

Es zeigen:

Fig. 1   Einen Fahrzeugzug, bestehend aus einem 4x2-Zugfahrzeug und einem mit dem Zugfahrzeug gekoppelten Auflieger-Anhängefahrzeug mit 2 Achsen, einer festen und einer entlastbaren Achse, bei denen die entlastbare Achse in Fahrtrichtung vor der festen Achse angeord-net ist;

Fig. 2   einen Fahrzeugzug, bestehend aus einem 6x2-Zugfahrzeug und einem mit dem Zugfahrzeug gekoppelten Auflieger-Anhängefahrzeug in der Bauweise des Anhängefahrzeugs nach Fig. 1.

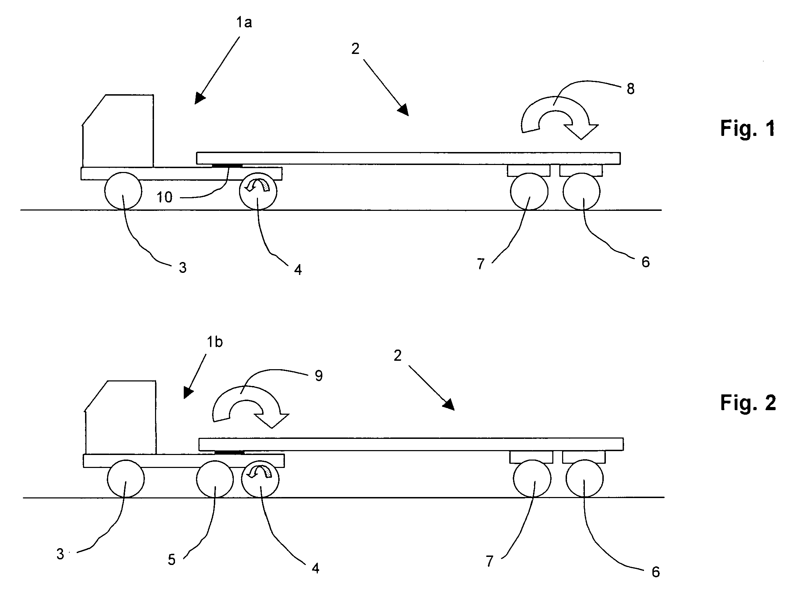

Die Fahrzeuge der Fahrzeugzüge in beiden Darstellungen, nämlich das 4x2-Zugfahrzeug (1a) nach Fig. 1, das 6x2-Zugfahrzeug (1b) nach Fig. 2 und die Auflieger-Anhängefahrzeuge (2) nach Fig. 1 und Fig. 2 verfügen über je mindestens eine elektronische Steuereinheit, eine Zugfahrzeug-Steuereinheit bzw. eine Anhängefahrzeug-Steuereinheit. In beiden Teilfahrzeugen sind Datenbusmittel vorgesehen, welche über eine elektrische Verbindung zwischen dem Zugfahrzeug und dem Anhängefahrzeug miteinander verbunden sind. Diese Datenbusmittel können in Form eines CAN-Datenbusses z. B. für Fahrzeugzüge im europäischen Raum oder in Form eines PLC-Datenbusses entsprechend der USA-Norm SAE J 249 für Fahrzeugzüge in den USA ausgebildet sein.

Für beide Abbildungen (Fig. 1 und Fig. 2) sind die Zugfahrzeuge (1a bzw. 1b) mit je einer Vorderachse und je einer als feste Achse ausgebildeten Triebachse (4, mit Drehpfeil) ausgerüstet, die Anhängefahrzeuge (2) verfügen neben der festen Aufliegerachse (6) über eine in Fahrtrichtung vor dieser Achse angeordnete entlastbare Achse (7). Das 6x2-Zugfahrzeug (1b) ist zusätzlich mit einer entlastbaren Achse (5) versehen, welche räumlich zwischen der Triebachse (4) und der Vorderachse (3) angeordnet ist.

Die beschriebenen räumlichen Anordnungen der entlastbaren Achse (7) zur festen Achse (6) des Aufliegers (2) bzw. der entlastbaren Achse (5) zur Triebachse (4) des Zugfahrzeugs stellen eine Voraussetzung für die unten erläuterten, durch einen Pfeil (8) bzw. einen Pfeil (9) angedeuteten Achslastverschiebungen zwischen der entlastbaren Achse (7) und der festen Achse (6) des Aufliegers (2) bzw. zwischen der entlastbaren Achse (5) und der Triebachse (4) des Zugfahrzeugs (1a, 1b) dar. Darüber hinaus können in einem Auflieger-Anhängefahrzeug (2) noch weitere entlastbare Achsen vorgesehen sein; auch können in einem Zugfahrzeug (1b) nach Fig. 2 weitere entlastbare Achsen vorhanden sein, wobei ein solches Fahrzeug dann natürlich kein 6x2-Zugfahrzeug mehr darstellt.

Die entlastbare Auflieger-Achse (7) und die entlastbare Zugfahrzeug-Achse (5) sind als luftgefederten Achsen ausgebildet, bei denen sich der Fahrzeugaufbau über mindestens einem mit Druckluft gefüllten, der entsprechenden Achse zugeordneten Luftfederbalg abstützt, wobei die Achslast, nämlich die auf eine derartige Achse ausgeübte Achslast-Gewichtskraft, durch das Produkt aus dem in den dieser Achse zugeordneten Luftfederbälgen herrschenden Luftdruck $p_L$ und der Summe $A_W$ der wirksamen Flächen dieser Luftfederbälge bestimmt ist. Der Luftdruck $p_L$ wird über einen Drucksensor erfasst, so dass sich mit der bekannten gesamten wirksamen Fläche $A_W$ die Achslast-Gewichtskraft für eine entlastbare Achse nach folgender Gleichung bestimmt:

$$F_{Achse-Luft} = A_W \cdot p_L \qquad\qquad [1]$$

Eine entlastbare Achse (7, 5) kann entweder als Schleppachse ausgebildet sein, bei der die ihr zugeordneten Luftfederbälge für den Fall, dass die Achse deaktiviert ist, d. h. keinen Lastanteil des Aufbaus übernimmt, entlüftet sind, oder sie kann als Liftachse ausgebildet sein. Bei einer deaktivierten Liftachse ist die Achse, zusätzlich zur Entlüftung der Luftfederbälge, über einen Liftzylinder von der Fahrbahn abgehoben. Funktionell sind beide Achsen bezüglich einer Achslastverlagerung jedoch insoweit gleichartig, dass in beiden Fällen der in den Luftfederbälgen herrschende Druck die Achslast-Gewichtskraft bestimmt, welche auf die entlastbare Achse einwirkt.

Die mit den entlastbaren Achsen (7, 5) in Achslast-Austausch tretenden Auflieger-Achse (6) bzw. Zugfahrzeug-Triebachse (4) sind wegen der luftgefederten Natur der entlastbaren Achsen (7 und 5) üblicherweise ebenfalls luftgefedert ausgeführt und dann meist auch mit einer elektropneumatischen Niveauregelung ausgerüstet. In diesem Fall lässt sich die Achslast-Gewichtskraft für die Achsen (6, 4) ebenfalls nach dem oben erläuterten Verfahren für die entlastbaren Achsen (7, 5) entsprechend Gleichung [1] bestimmen.

Es ist aber nicht zwingend erforderlich, dass die Achsen (6 und 4) luftgefedert ausgeführt sind; sie können auch mit einer Stahlfederung versehen sein, und dann bestimmt sich die Achslast-Gewichtskraft entsprechend einer Federkennlinie wie z. B. nach Gleichung [2], wobei c die Federkonstante, $h_0$ die Federlänge der unbelasteten Stahlfeder und h die mit einem Abstandssensor zu messende, die aktuelle Niveauhöhe beschreibende Länge der durch den Aufbau komprimierten Stahlfeder darstellt:

$$F_{Achse-Stahl} = c \cdot (h_0 - h) \qquad\qquad [2]$$

Beim 6x2-Zugfahrzeug (1b) nach Fig. 2 ist, wenn dieses Fahrzeug vollluftgefedert ist, die Vorderachse (3) ebenfalls mit einer Luftfederung versehen, wenn es dagegen ein teilluftgefedertes Fahrzeug darstellt (die Achsen (5) und (4) sind luftgefedert), dann ist die Vorderachse (3) stahlgefedert ausgeführt.

Das 4x2-Zugfahrzeug (1a) nach Fig. 1 kann entweder als vollständig stahlgefedertes Fahrzeug ausgebildet sein, wobei dann die Achslast für die Triebachse (4) wie erläutert nach Gleichung [2] bestimmbar ist, oder es kann als teilluftgefedertes Fahrzeug ausgebildet sein, bei dem die Vorderachse (3) dann stahlgefedert und die Hinterachse luftgefedert ausgeführt ist, oder es kann als vollluftgefedertes Fahrzeug ausgebildet sein, wenn sowohl Vorder- (3) wie auch Triebachse (4) luftgefedert sind. Bei den luftgefederten Varianten für die Triebachse (4) ist die Achslast nach der oben erläuterten Formel [1] bestimmbar.

Die im Zuge des nachstehend erläuterten Verfahrens zur Traktionserhöhung erforderliche Bestimmung von aktuellen Achslasten für die Achsen (4, 5, 6 und 7) erfolgt also entsprechend Gleichung [1], wenn die entsprechende Achse als luftgefederte, und entsprechend Gleichung [2], wenn die entsprechende Achse als stahlgefederte Achse ausgebildet ist.

Eine Anfahrhilfe dient zur Erhöhung der Traktion des Fahrzeugzuges (1, 2) beim Anfahren, wenn bei ungünstigem Reibungsverhältnis der Fahrbahn (geringe μ-Reibwerte bei z. B. Nässe oder Eis) die von den Rädern der Triebachse (4) auf die Fahrbahn übertragbare Vortriebskraft beim Anfahren überschritten wird und mindestens ein Rad der Triebachse (4) durchzudrehen beginnt: Zur Abhilfe wird in diesem Fall die Achslast auf die Triebachse (4) erhöht.

Im grundsätzlichen wird entsprechend der Erfindung eine Erhöhung der Triebachsen-Achslast (4) durch eine Achslastverlagerung (8) im Auflieger (2) entsprechend Fig. 1 durchgeführt. Durch diese Verlagerung (8) wird mit der Entlastung der Achse (7) bei gleichbleibender Auflieger-Gesamtlast aber vergrößertem wirksamen Hebelarm das vom Auflieger auf die Sattelplatte (10) des Zugfahrzeugs (1a) wirkende linksdrehende Drehmoment erhöht, so dass nun auf die Triebachse (4) eine erhöhte Achslast-Gewichtskraft ausgeübt wird, mit der sich entsprechend dem übertragbaren Reibwert μ auch die übertragbare Vortriebskraft erhöht.

Das Bedürfnis zur Aktivierung der Anfahrhilfe tritt auf, wenn beim Anfahren eines oder beide Räder der Triebachse (4) des Zugfahrzeugs (1a, 1b) durchzudrehen beginnen, und dann wird eine Traktionserhöhungs-Anforderung an die Zugfahrzeug-Steuereinheit gestellt, welche entweder durch den Fahrer mit Betätigung eines entsprechenden Schalters, oder automatisch durch eine z. B. als ABS-/ASR-Steuereinheit ausgebildete, den Schlupf der Triebachse (4) des Zugfahrzeugs (1a) überwachende elektronische Steuereinheit erfolgt, wenn diese das beginnende Durchdrehen erkennt und über die Datenbusmittel die Traktionserhöhungs-Anforderung als Botschaft an die Zugfahrzeug-Steuereinheit stellt.

Der Zugfahrzeug-Steuereinheit ist die Struktur des Zugfahrzeugs bekannt; liegt ein 4x2-Zugfahrzeug (1a) nach Fig. 1 vor, dann wird eine Auflieger-Traktionserhöhungs-Anforderung gestellt, liegt dagegen ein 6x2-Zugfahrzeug (1b) nach Fig. 2 vor, dann wird zunächst die unten erläuterte Zugfahrzeug-Traktionserhöhungs-Anforderung gestellt.

Im Rahmen einer aktivierten Auflieger-Traktionserhöhung wird die oben kurz erklärte Achslastverlagerung (8) von der Anhängefahrzeug-Steuereinheit durchgeführt, worauf sich die erläuterte Erhöhung der Achslast-Gewichtskraft auf die Triebachse (4) des Zugfahrzeugs (1a) per Drehmomenterhöhung einstellt. Die gestellte Auflieger-Traktionserhöhungs-Anforderung wird also von der Zugfahrzeug-Steuereinheit über die Datenbusmittel an die Anhängefahrzeug-Steuereinheit weitergeleitet, damit sie den ihr zugedachten Part übernehmen kann; die Durchführung der Vorgänge zur Traktionserhöhung findet "gemeinsam" statt (außer der unten erläuterten Zugfahrzeug-Traktionserhöhung) und während all dieser Vorgänge ergibt sich ein reger Datenverkehr zwischen beiden Steuereinheiten, der über die Datenbusmittel mit Hilfe von Botschaften abgewickelt wird. Mit diesen Botschaften werden z. B. Anforderungen, Status-Rückmeldungen oder aktuelle Achslasten von einer zur anderen der beiden Steuereinheiten übertragen.

Mit der gestellten Auflieger-Traktionserhöhungs-Anforderung werden in einem ersten Schritt für die Triebachse (4) des Zugfahrzeugs (1a) und für die Achsen des Anhängefahrzeugs, nämlich die entlastbare Achse (7) und die feste Achse (6), die aktuellen Achslasten, d. h. die Achslast-Gewichtskräfte, bestimmt.

In einem zweiten Schritt wird geprüft, ob die aktuelle Achslast der Triebachse (4) kleiner ist als ihre zulässige maximale Achslast. Ist die aktuelle Achslast der Triebachse (4) des Zugfahrzeugs (1a) nicht kleiner als ihre maximale Achslast, so wird nichts weiter unternommen, ist dagegen die aktuelle Achslast kleiner als ihre maximale Achslast, so wird in einem dritten Schritt die Auflieger-Anfahrhilfe aktiviert, und es wird die Entlastung (8) der entlastbaren Achse (7) des Aufliegers (2) nach Fig. 1 durchgeführt.

Bei dieser Entlastung wird der Druck in den der Achse (7) des Aufliegers (2) zugeordneten Luftfederbälgen verringert und der durch die Verringerung "frei werdende" Lastanteil wird auf die feste Achse (6) des Aufliegers (2) übertragen; durch die Achslastverlagerung (8) wird also die auf der festen Achse (6) ruhende Achslast erhöht. Während der in zeitlichen Schritten durchgeführten Achslastverlagerung (8) wird laufend, d. h. nach jedem Schritt, jeweils überprüft, ob die maximal zulässige Achslast der festen Achse (6) des Aufliegers (2) unterschritten, erreicht oder überschritten wird. Die Achslastverlagerung (8) wird nur bis maximal zu dem Zustand durchgeführt, dass die maximal zulässige Achslast der festen Achse (6) eingehalten ist, und dann wird die Achslastverlagerung (8) beendet: Dies stellt eine erste Bedingung für die Beendigung der Achslastverlagerung (8) dar.

Wie vorstehend erläutert, erfolgt mit der Achslastverlagerung (8) eine Erhöhung der Achslast für die Triebachse (4) des Zugfahrzeugs (la), und mit der erläuterten schrittweise durchgeführten Achslastverlagerung (8) wird auch die aktuelle Achslast der Triebachse (4) des Zugfahrzeugs laufend ermittelt, und sie wird dann beendet, wenn für die Triebachse (4) die maximal zulässige Achslast erreicht ist: Das Erreichen dieser Maximallast an der Triebachse (4) stellt eine zweite Bedingung für die Beendigung der Achslastverlagerung (8) dar.

Während der kontinuierlichen, in Schritten durchgeführten Achslastverlagerung (8) werden also beide Ende-Bedingungen laufend überprüft und sie wird dann beendet, wenn eine der beiden Bedingungen erfüllt ist.

Im Fall, dass ein Zugfahrzeug (1b) nach Fig. 2 mit mindestens einer entlastbaren Achse (5) vorliegt, wird nach Aktivierung der Traktionserhöhungs-Anforderung zunächst nicht die Auflieger-Traktionserhöhungs-Anforderung gesetzt, sondern eine Zugfahrzeug-Traktionserhöhungs-Anforderung, welche wie erwähnt von der Zugfahrzeug-Steuereinheit allein weiter bearbeitet wird.

Nach Aktivierung dieser Zugfahrzeug-Traktionserhöhungs-Anforderung wird geprüft, ob die aktuelle Achslast der Triebachse (4) kleiner ist als ihre maximal zulässige Achslast, und wenn dies der Fall ist, so wird eine Zugfahrzeug-Traktionserhöhung aktiviert, im Zuge derer durch Entlüftung der der entlastbaren Achse (5) zugeordneten Luftfederbälge eine Achslastverlagerung (9) von der entlastbaren Achse (5) zur Triebachse (4) in der erläuterten Art in zeitlichen Schritten vorgenommen wird; während der Schritte dieser Verlagerung wird wieder laufend geprüft, ob an der Triebachse (4) die maximal zulässige Achslast erreicht ist, und sie wird bei Erreichen dieses Grenzwertes beendet.

Wenn an der Triebachse (4) die maximal zulässige Achslast erreicht ist, bevor die entlastbare Achse (5) vollständig entlastet ist, so stellt dies das Ende aller Achslastverlagerungs-Vorgänge dar; wenn es unter Einhaltung der maximal zulässigen Achslast der Triebachse (4) möglich ist, so wird die Achslastverlagerung (9) bis zur vollständigen Entlüftung der der entlastbaren Achse (5) zugeordneten Luftfederbälge durchgeführt; mit dieser wird die Zugfahrzeug-Traktionserhöhung beendet.

Sollte nach der Achslastverlagerung (9) bei vollständiger Entlüftung dieser Luftfederbälge die aktuelle Achslast der Triebachse (4) noch geringer sein als ihre maximal zulässige Achslast, dann wird im Anschluss an die Zugfahrzeug-Traktionserhöhung eine Auflieger-Traktionserhöhungs-Anforderung gesetzt, und diese wird wie vorstehend erläutert durchgeführt.

Zusammenfassend sei also festgestellt, dass bei einem Zugfahrzeug vom Typ (1b) nach Fig. 2 zunächst eine Zugfahrzeug-Traktionserhöhung möglichst vollständig durchgeführt wird, worauf sich, wenn an der Triebachse (4) die maximal zulässige Achslast noch nicht erreicht ist, eine Auflieger-Traktionserhöhung anschließt, wogegen bei einem Zugfahrzeug vom Typ (1a) nach Fig. 1 ausschließlich eine Auflieger-Traktionserhöhung durchgeführt wird.

**Patentansprüche**

1. Verfahren zur Steuerung einer Anfahrhilfe in einem Fahrzeugzug bestehend aus einem Zugfahrzeug (1) und einem mit diesem Zugfahrzeug gekoppelten, als Auflieger ausgebildeten Anhängefahrzeug (2), bei welchem neben einer festen Achse (6) mindestens eine in Fahrtrichtung vor der festen Achse (6) angeordnete entlastbare Achse (7) vorgesehen ist, wobei bei einer aktivierten Auflieger-Traktionserhöhung eine Achslastverlagerung durch Entlastung der mindestens einen entlastbaren Achse (7) des Anhängefahrzeugs (2) durchgeführt wird, **dadurch gekennzeichnet**, das sowohl das Zugfahrzeug (1) als auch das Anhängefahrzeug (2) über je mindestens eine elektronische Steuereinheit verfügen, welche über Datenbusmittel elektronisch miteinander verbunden sind, wobei mindestens die als Triebachse (4) ausgebildete Achse des Zugfahrzeugs und die Achsen (6, 7) des Anhängefahrzeugs (2) mit einer Lastsensierungseinrichtung ausgerüstet sind und wobei die Auflieger-Traktionserhöhung mit folgenden Schritten durchgeführt wird:

   a) Nach Vorliegen einer Auflieger-Traktionserhöhungs-Anforderung werden in einem ersten Schritt die aktuellen Achslasten, nämlich die Achslast-Gewichtskräfte, für die Triebachse (4) des Zugfahrzeugs (1) und für die Achsen (6, 7) des Anhängefahrzeugs (2) bestimmt;
   b) in einem zweiten Schritt wird geprüft, ob die aktuelle Achslast der Triebachse (4) des Zugfahrzeugs (1) kleiner ist als ihre zulässige maximale Achslast;
   c) ist die aktuelle Achslast der Triebachse (4) des Zugfahrzeugs (1) nicht kleiner als ihre maximale Achslast, so wird keine Aktivierung der Auflieger-Traktionserhöhung vorgenommen;
   d) ist die aktuelle Achslast kleiner als die maximale Achslast, so wird in einem dritten Schritt die Auflieger-Traktionserhöhung aktiviert und es wird zur Achslastverlagerung die Entlastung der mindestens einen entlastbaren Achse (7) des Anhängefahrzeugs (2) vorgenommen, bis eine von zwei Bedingungen zur Beendigung der Achslastverlagerung gegeben ist.

2. Anfahrhilfe-Steuerungs-Verfahren nach Anspruch 1, **dadurch gekennzeichnet, dass** eine erste Bedingung zur Beendigung der Achslastverlagerung gegeben ist, wenn die Achslast der festen Achse (6) des Aufliegers (2) die maximal zulässige Achslast erreicht.

3. Anfahrhilfe-Steuerungs-Verfahren nach Anspruch 1 oder 2, **dadurch gekennzeichnet, dass** eine zweite Bedingung zur Beendigung der Achslastverlagerung gegeben ist, wenn die Achslast der Triebachse (4) des Zugfahrzeugs (1) die maximal zulässige Achslast erreicht.

4. Anfahrhilfe-Steuerungs-Verfahren nach einem der Ansprüche 1 bis 3, **dadurch gekennzeichnet, dass** die Datenbusmittel in Form eines CAN-Datenbusses ausgebildet sind.

5. Anfahrhilfe-Steuerungs-Verfahren nach einem der Ansprüche 1 bis 3, **dadurch gekennzeichnet, dass** die Datenbusmittel in Form eines PLC-Datenbus entsprechend der USA-Norm SAE J 2497 ausgebildet sind.

6. Anfahrhilfe-Steuerungs-Verfahren nach einem der Ansprüche 1 bis 5, **dadurch gekennzeichnet, dass** die Bestimmung der aktuellen Achslasten für die Achsen (6, 7) des Anhängefahrzeugs (2) in der mindestens einen im Anhängefahrzeug (2) vorgesehenen elektronischen Steuereinheit und die Bestimmung der aktuellen Achslast für die Triebachse (4) des Zugfahrzeugs in der mindestens einen im Zugfahrzeug vorgesehenen elektronischen Steuereinheit durchgeführt wird.

7. Anfahrhilfe-Steuerungs-Verfahren nach Anspruch 6, **dadurch gekennzeichnet, dass** die mindestens eine elektronische Steuereinheit im Zugfahrzeug (1) die Steuerung der Entlastung der mindestens einen entlastbaren Achse (7) des Anhängefahrzeugs (2) im Zusammenwirken mit der mindestens einen im Anhängefahrzeug (2) vorgesehenen elektronischen Steuereinheit unter Verwendung von Daten-Botschaften über die Datenbusmittel durchführt.

8. Anfahrhilfe-Steuerungs-Verfahren nach einem der Ansprüche 1 bis 7, **dadurch gekennzeichnet, dass** nach Aktivierung der Auflieger-Traktionserhöhung die aktuelle Achslast der Zugfahrzeug-Triebachse (4) laufend ermittelt wird.

9. Anfahrhilfe-Steuerungs-Verfahren nach einem der Ansprüche 1 bis 8, **dadurch gekennzeichnet, dass** nach der Aktivierung der Auflieger-Traktionserhöhung die Traktionserhöhung auf der Triebachse (4) des Zugfahrzeugs (1) durch Entlastung der mindestens einen entlastbaren Achse (7) des Anhängefahrzeugs (2) kontinuierlich weitergeführt wird, bis die aktuelle Achslast auf der Zugfahrzeug-Triebachse (4) gleich ihrer maximalen Achslast ist.

10. Anfahrhilfe-Steuerungs-Verfahren nach Anspruch 9, **dadurch gekennzeichnet, dass** die kontinuierlich weitergeführte Entlastung der mindestens einen entlastbaren Achse (7) des Anhängefahrzeugs (2) in zeitlich aufeinanderfolgenden Schritten erfolgt.

11. Anfahrhilfe-Steuerungs-Verfahren nach mindestens einem der vorstehenden Ansprüche, **dadurch gekennzeichnet, dass** bei Vorhandensein einer weiteren im Zugfahrzeug vorgesehenen Achse (5), einer in der Nachbarschaft zu der Triebachse (4) angeordneten Achse, welche mit pneumatischen Mitteln zu entlasten ist, zuerst eine Traktionserhöhung der Antriebsachse durch eine Entlastung der weiteren pneumatisch zu entlastenden Achse (5) im Zugfahrzeug (1) im Rahmen einer Zugfahrzeug-Traktionserhöhung erfolgt, bevor die Traktionserhöhung durch Entlastung der mindestens einen entlastbaren Achse(7) des Anhängefahrzeugs (2) ensprechend der Auflieger-Traktionserhöhung durchgeführt wird.

12. Anfahrhilfe-Steuerungs-Verfahren nach Anspruch 11, **dadurch gekennzeichnet, dass** die Traktionserhöhung durch die Entlastung der weiteren pneumatisch zu entlastenden Achse (5) im Zugfahrzeug (1) bis zu ihrer vollständigen Entlastung durchgeführt wird, bevor mit der Durchführung der Traktionserhöhung durch Entlastung der mindestens einen entlastbaren Achse (7) des Anhängefahrzeugs (2) entsprechend der Auflieger-Traktionserhöhung begonnen wird.

13. Anfahrhilfe-Steuerungs-Verfahren nach mindestens einem der Ansprüche 1 bis 11, **dadurch gekennzeichnet, dass** eine Traktionserhöhungs-Anforderung durch den Fahrer gestellt wird.

14. Anfahrhilfe-Steuerungs-Verfahren nach mindestens einem der Ansprüche 1 bis 11, **dadurch gekennzeichnet, dass** eine Traktionserhöhungs-Anforderung durch eine den Schlupf der Triebachse (4) des Zugfahrzeugs (1) überwachende elektronische Steuereinheit gestellt wird.

**Claims**

1. Start-assist control method in a vehicle train composed of a towing vehicle (1) and a trailer vehicle (2) which is coupled to this towing vehicle and is embodied as a semitrailer, in which vehicle train, in addition to a fixed axle (6), at least one axle (7) which can be relieved of loading and which is arranged in front of the fixed axle (6) in the direction of travel is provided, wherein in the case of an activated increase in the semitrailer traction, shifting of the axle load is carried out by relieving of loading of the at least one axle (7) of the trailer vehicle (2) which can be relieved of loading, **characterized in that** both the towing vehicle (1) and the trailer vehicle (2) each have at least one electronic control unit, which control units are connected to one another electronically via data bus means, wherein at least the axle of the towing vehicle, embodied as a drive axle (4), and the axles (6, 7) of the trailer vehicle (2) are equipped with a load-sensing device, and wherein the increase in the traction of the semitrailer is carried out with the following steps:

a) after the presence of a request to increase the traction of the semitrailer, in a first step the current axle loads, specifically the axle load weight forces are determined for the drive axle (4) of the towing vehicle (1) and for the axles (6, 7) of the trailer vehicle (2);

b) in a second step it is checked whether the current axle load of the drive axle (4) of the towing vehicle (1) is lower than its permissible maximum axle load;

c) if the current axle load of the drive axle (4) of the towing vehicle (1) is not lower than its maximum axle load, the increase in the traction of the semitrailer is not carried out;

d) if the current axle load is lower than the maximum axle load, in a third step the increase in the traction of the semitrailer is activated, and in order to shift the axle load the relieving of loading of the at least one axle (7) of the trailer vehicle (2) which can be relieved of loading is carried out until one of two conditions for ending the shifting of the axle load is met.

2. Start-assist control method according to Claim 1, **characterized in that** a first condition for ending the shift of the axle load is met if the axle load of the fixed axle (6) of the semitrailer (2) reaches the maximum permissible axle load.

3. Start-assist control method according to Claim 1 or 2, **characterized in that** a second condition for ending the shift of the axle load is met if the axle load of the drive axle (4) of the towing vehicle (1) reaches the maximum permissible axle load.

4. Start-assist control method according to one of Claims 1 to 3, **characterized in that** the data bus means are embodied in the form of a CAN data bus.

5. Start-assist control method according to one of Claims 1 to 3, **characterized in that** the data bus means are embodied in the form of a PLC data bus corresponding to USA Standard SAE J 2497.

6. Start-assist control method according to one of Claims 1 to 5, **characterized in that** the determination of the current axle loads for the axles (6, 7) of the trailer vehicle (2) is carried out in the at least one electronic control unit which is provided in the trailer vehicle (2), and the determination of the current axle load for the drive axle (4) of the towing vehicle is carried out in the at least one electronic control unit which is provided in the towing vehicle.

7. Start-assist control method according to Claim 6, **characterized in that** the at least one electronic control unit in the towing vehicle (1) carries out the control of the relieving of loading of the at least one axle (7) of the trailer vehicle (2) which can be relieved of loading in interaction with the at least one electronic control unit provided in the trailer vehicle (2), using data messages via the data bus means.

8. Start-assist control method according to one of Claims 1 to 7, **characterized in that** after the activation of the increase in the traction of the semitrailer the current axle load of the towing vehicle drive axle (4) is determined continuously.

9. Start-assist control method according to one of Claims 1 to 8, **characterized in that** after the activation of the increase in the traction of the semitrailer the increase in the traction at the drive axle (4) of the towing vehicle (1) is constantly continued by relieving of the loading of the at least one axle (7) of the trailer vehicle (2) which can be relieved of loading, until the current axle load at the towing vehicle drive axle (4) is equal to its maximum axle load.

10. Start-assist control method according to Claim 9, **characterized in that** the constantly continued relieving of the loading of the at least one axle (7) of the trailer vehicle (2) which can be relived of loading takes place in chronologically successive steps.

11. Start-assist control method according to at least one of the preceding claims, **characterized in that** given the presence of a further axle (5) provided in the towing vehicle, an axle which is arranged in the vicinity of the drive axle (4) and which can be relieved of loading with pneumatic means, an increase in traction of the drive axle is firstly carried out by relieving the loading of the further axle (5) which is to be relieved of loading pneumatically in the towing vehicle (1) within the scope of an increase in the traction of the towing vehicle, before the increase in the traction is carried out by relieving the loading of the at least one axle (7) of the trailer vehicle (2) which can be relieved of loading, in accordance with the increase in the traction of the semitrailer.

12. Start-assist control method according to Claim 11, **characterized in that** the increase in the traction is carried out by the relieving of loading of the further axle (5), which is to be relieved of loading pneumatically, in the towing vehicle (1) until said axle (5) is completely relieved of loading, before the increasing of the traction is started by relieving the loading of the at least one axle (7) of the trailer vehicle (2) which can be relieved of loading, in accordance with the increase in the traction of the semitrailer.

13. Start-assist control method according to at least one of Claims 1 to 11, **characterized in that** a request to increase the traction is made by the driver.

14. Start-assist control method according to at least one of Claims 1 to 11, **characterized in that** a request to increase the traction is made by an electronic control unit which monitors the slip of the drive axle (4) of the towing vehicle (1).

**Revendications**

1. Procédé pour la commande d'une aide au démarrage dans un train de véhicules se composant d'un véhicule tracteur (1) et d'une remorque (2), réalisée en tant que semi-remorque, couplée à ce véhicule tracteur, dans lequel, mis à part un essieu fixe (6), on prévoit au moins un essieu à charge supprimable (7) disposé en direction de circulation devant l'essieu fixe (6), dans lequel, en cas d'une augmentation de traction de semi-remorque activée, un déplacement de charge à l'essieu par suppression de charge de l'au moins un essieu à charge supprimable (7) de la remorque (2) est effectué, **caractérisé en ce que** le véhicule tracteur (1) tout comme également la remorque (2) disposent respectivement d'au moins une unité de commande électronique, lesquelles sont reliées électroniquement ensemble via des moyens de bus de données, dans lequel au moins l'essieu réalisé en tant qu'essieu moteur (4) du véhicule tracteur et les essieux (6, 7) de la remorque (2) sont équipés d'un dispositif de détection de charge, et dans lequel l'augmentation de traction du semi-remorque est réalisée avec les étapes suivantes :

a) suite à la présence d'une demande d'augmentation de traction du semi-remorque, dans une première étape, les charges à l'essieu actuelles, à savoir les poids de charge à l'essieu, sont déterminées pour l'essieu moteur (4) du véhicule tracteur (1) et pour les essieux (6, 7) de la remorque (2) ;
b) dans une deuxième étape, une vérification est faite pour savoir si la charge à l'essieu actuelle de l'essieu moteur (4) du véhicule tracteur (1) est inférieure à sa charge à l'essieu maximale autorisée ;
c) si la charge à l'essieu actuelle de l'essieu moteur (4) du véhicule tracteur (1) n'est pas inférieure à sa charge à l'essieu maximale, alors il n'y a pas d'activation de l'augmentation de la traction du semi-remorque ;
d) si la charge à l'essieu actuelle est inférieure à la charge à l'essieu maximale, alors, dans une troisième étape, on active l'augmentation de la traction du semi-remorque et on procède, pour le déplacement de la charge à l'essieu, à la suppression de charge de l'au moins un essieu à charge supprimable (7) de la remorque (2) jusqu'à remplir l'une d'entre deux conditions pour mettre fin au déplacement de charge à l'essieu.

2. Procédé de commande d'aide au démarrage selon la revendication 1, **caractérisé en ce qu'**une première condition pour mettre fin au déplacement de charge à l'essieu est remplie lorsque la charge à l'essieu de l'essieu fixe (6) du semi-remorque (2) atteint la charge à l'essieu maximale autorisée.

3. Procédé de commande d'aide au démarrage selon la revendication 1 ou 2, **caractérisé en ce qu'**une deuxième condition pour mettre fin au déplacement de charge à l'essieu est remplie lorsque la charge à l'essieu de l'essieu moteur (4) du véhicule tracteur (1) atteint la charge à l'essieu maximale autorisée.

4. Procédé de commande d'aide au démarrage selon l'une des revendications 1 à 3, **caractérisé en ce que** les moyens de bus de données sont réalisés sous la forme d'un bus de données CAN.

5. Procédé de commande d'aide au démarrage selon l'une des revendications 1 à 3, **caractérisé en ce que** les moyens de bus de données sont réalisés sous la forme d'un bus de données PLC conformément à la norme américaine SAE J 2497.

6. Procédé de commande d'aide au démarrage selon l'une des revendications 1 à 5, **caractérisé en ce que** la détermination des charges à l'essieu actuelles pour les essieux (6, 7) de la remorque (2) est effectuée dans l'au moins une unité de commande électronique prévue dans la remorque (2) et **en ce que** la détermination de la charge à l'essieu actuelle pour l'essieu moteur (4) du véhicule tracteur est effectuée dans l'au moins une unité de commande électronique prévue dans le véhicule tracteur.

7. Procédé de commande d'aide au démarrage selon la revendication 6, **caractérisé en ce que** l'au moins une unité de commande électronique dans le véhicule tracteur (1) effectue la commande de suppression de charge de l'au moins un essieu à charge supprimable (7) de la remorque (2) en coopération avec l'au moins une unité de commande électronique prévue dans la remorque (2) en utilisant des messages de données via les moyens de bus de données.

8. Procédé de commande d'aide au démarrage selon l'une des revendications 1 à 7, **caractérisé en ce que**, après l'activation de l'augmentation de traction du semi-remorque, on détermine en permanence la charge à l'essieu actuelle de l'essieu moteur (4) du véhicule tracteur.

9. Procédé de commande d'aide au démarrage selon l'une des revendications 1 à 8, **caractérisé en ce que**, après l'activation de l'augmentation de traction du semi-remorque, on poursuit de manière continue l'augmentation de traction sur l'essieu moteur (4) du véhicule tracteur (1) par suppression de charge de l'au moins un essieu à charge supprimable (7) de la remorque (2) jusqu'à ce que la charge à l'essieu actuelle sur l'essieu moteur (4) du véhicule tracteur soit égale à sa charge à l'essieu maximale.

10. Procédé de commande d'aide au démarrage selon la revendication 9, **caractérisé en ce que** la suppression de charge poursuivie en continu de l'au moins un essieu à charge supprimable (7) de la remorque (2) s'effectue par étapes chronologiques successives.

11. Procédé de commande d'aide au démarrage selon l'une au moins des revendications précédentes, **caractérisé en ce que**, en cas de présence d'un autre essieu (5) prévu dans le véhicule tracteur, à savoir d'un essieu disposé au voisinage de l'essieu moteur (4), dont la charge doit être supprimée avec des moyens pneumatiques, il y a tout d'abord une augmentation de traction de l'essieu moteur grâce à un suppression de charge de l'autre essieu (5) dont la charge doit être supprimée pneumatiquement dans le véhicule tracteur (1) dans le cadre d'une augmentation de traction de véhicule tracteur avant de réaliser l'augmentation de traction par suppression de charge de l'au moins un essieu (7) à charge supprimable de la remorque (2) de manière correspondante à l'augmentation de traction du semi-remorque.

12. Procédé de commande d'aide au démarrage selon la revendication 11, **caractérisé en ce que** l'augmentation de traction est réalisée grâce à la suppression de charge de l'autre essieu (5) dont la charge doit être supprimée pneumatiquement dans le véhicule tracteur (1) jusqu'à sa suppression de charge complète avant de commencer à effectuer l'augmentation de traction par suppression de charge de l'au moins un essieu (7) à charge supprimable de la remorque (2) de manière correspondante à l'augmentation de traction du semi-remorque.

13. Procédé de commande d'aide au démarrage selon l'une au moins des revendications 1 à 11, **caractérisé en ce que** le conducteur effectue une demande d'augmentation de traction.

14. Procédé de commande d'aide au démarrage selon l'une au moins des revendications 1 à 11, **caractérisé en ce qu'**une demande d'augmentation de traction est effectuée par une unité de commande électronique surveillant le patinage de l'essieu moteur (4) du véhicule tracteur (1).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0411352 B1
- EP 1359085 A2

- DE 3734618 C1
- DE 10216564 A1